# FASCICULE DE BREVET EUROPEEN

(11) **EP 0 733 504 B1**
(45) Date de publication et mention de la délivrance du brevet: **26.07.2000**
(21) Numéro de dépôt: 96400616.7
(22) Date de dépôt: 22.03.1996
(51) Int. Cl.: B60H 1/00

(54) **Circuit de fluide de climatisation pour véhicule permettant un chauffage à puissance réglable**
Fluidkreislauf einer Fahrzeugklimaanlage, der eine Heizung mit steuerbarer Leistung ermöglicht
Vehicle air conditioning fluid circuit allowing heating with controllablepower

(30) Priorité: 22.03.1995 FR 9503360
(43) Date de publication de la demande: 25.09.1996
(73) Titulaire: VALEO CLIMATISATION, 78320 Le Mesnil Saint-Denis (FR)
(72) Inventeur: Karl, Stefan, 75015 Paris (FR)

(56) Documents cités:
- FR-A- 2 624 067
- FR-A- 2 717 126
- US-A- 5 291 941

## Description

L'invention concerne un procédé pour modifier la température d'un flux d'air à envoyer dans l'habitacle d'un véhicule, par échange de chaleur avec un évaporateur dans lequel circule un fluide qui passe également dans un compresseur et dans un détendeur, ce procédé comportant un mode de refroidissement du flux d'air dans lequel on fait circuler ledit fluide successivement dans l'évaporateur, dans le compresseur, dans un condenseur où il cède de la chaleur à un autre milieu et dans un détendeur.

Un tel procédé est utilisé de façon classique pour la climatisation de l'habitacle du véhicule, notamment d'un véhicule à moteur thermique ou électrique. Lorsqu'il s'agit de réchauffer l'air à envoyer dans l'habitacle, on utilise habituellement la chaleur produite par le moteur, par exemple en faisant passer le flux d'air en contact avec un radiateur de chauffage traversé par un fluide de refroidissement du moteur.

Lorsque le moteur est froid, on ne peut en tirer de la chaleur pour le chauffage de l'habitacle, ce qui retarde le moment où celui-ci se trouve à la température souhaitée et nuit donc au confort des occupants. Dans certains cas le liquide de refroidissement n'atteint jamais pendant le trajet une température suffisamment élevée pour assurer le confort thermique dans l'habitacle.

Pour accélérer la mise en température de l'habitacle, on peut avoir recours à des dispositifs supplémentaires comportant notamment des brûleurs ou des radiateurs électriques, qui impliquent des investissements importants.

Les documents FR 2 717 126 et US 5,291,941 divulgue une boucle frigorigène d'un dispositif de climatisation de véhicule. Cette boucle peut fonctionner soit dans un mode de refroidissement, soit dans un mode de réchauffage dans lequel le fluide frigorigène court-circuite le condenseur et passe dans l'évaporateur après avoir été détendu . En mode de chauffage, l'évaporateur joue le rôle d'échangeur de chaleur, il fournità l'habitacle du véhicule la chaleur produite par la compression du fluide. Cependant, ce type de boucle ne permet pas d'ajuster la puissance calorifique délivrée par l'évaporateur lorsque celui-ci fonctionne en mode chauffage.

Le but de l'invention est de permettre un chauffage rapide de l'habitacle lorsque le moteur est froid, ou de compléter la quantité de chaleur insuffisante qu'il fournit, sans avoir recours à des moyens spécifiques coûteux et en ajustant la puissance calorifique aux besoins.

L'invention vise notamment un procédé du genre défini en introduction, et prévoit qu'il comporte un mode de réchauffage du flux d'air dans lequel on envoie le fluide sortant du compresseur à l'évaporateur, sans passer par un condenseur, et qu'on extrait ou ajoute du fluide de ou dans l'évaporateur de manière à régler la masse de fluide traversant l'évaporateur dans le mode de réchauffage, et par conséquent la puissance calorifique produite.

Le mode de réchauffage, utilisable pour le chauffage de l'habitacle notamment lorsque le moteur est froid, fait ainsi appel à l'installation de climatisation existante, avec des modifications mineures.

Cependant, la puissance calorifique engendrée dans le mode de réchauffage est déterminée par le débit massique produit par le compresseur, lui-même fonction de sa vitesse d'entraînement et par suite du régime du moteur. Cette puissance peut être supérieure ou inférieure à celle nécessaire pour le chauffage de l'habitacle. L'invention permet d'utiliser la réserve de fluide à l'état liquide contenue dans le condenseur pour augmenter la quantité de fluide en circulation dans le mode de réchauffage de manière à augmenter le débit massique et la puissance calorifique pour une vitesse donnée du compresseur, et/ou de retourner un excédent de fluide dans le condenseur pour diminuer ce débit et cette puissance. En particulier, en cas de démarrage à basse température, la densité initiale du fluide du circuit de climatisation, et par conséquent le débit massique produit par le compresseur, sont insuffisants pour assurer un chauffage satisfaisant. Cet inconvénient est réduit grâce à l'aspiration de fluide supplémentaire à partir du condenseur.

D'autres caractéristiques, complémentaires ou alternatives, de l'invention sont énoncées ci-après :
- On relie momentanément le compresseur et le condenseur de façon à extraire du fluide de celui-ci ou à y en introduire.
- Le fluide traverse des détendeurs différents dans les deux modes.
- L'évaporateur joue le rôle d'évaporateur dans le mode de refroidissement et joue seulement le rôle d'échangeur de chaleur dans le mode de réchauffage.
- Le véhicule possède un moteur d'entraînement dont le fonctionnement dégage de la chaleur et on utilise le mode de réchauffage pour le chauffage de l'habitacle dans les périodes où la chaleur fournie par le moteur est insuffisante à cet effet.

L'invention a également pour objet un dispositif de climatisation de l'habitacle d'un véhicule automobile, comprenant un circuit de fluide comportant une boucle de refroidissement composée d'une première branche contenant un évaporateur suivi d'un compresseur et d'une seconde branche contenant un condenseur, la boucle de refroidissement contenant également un premier détendeur interposé entre le condenseur et l'évaporateur, et des moyens pour envoyer dans l'habitacle de l'air ayant subi un échange de chaleur avec l'évaporateur.

Le dispositif selon l'invention comprend en outre une troisième branche ne contenant pas de condenseur, placée en parallèle avec la seconde branche de façon à former avec la première branche une boucle de réchauffage, et des moyens de commutation pour commander la circulation du fluide soit dans la boucle de refroidissement, soit dans la boucle de réchauffage, soit dans un trajet de chargement de fluide dans laquelle le condenseur est relié directement à l'entrée du compresseur, soit en variante dans une boucle de déchargement de fluide dans laquelle le condenseur est relié directement à la sortie du compresseur.

Le dispositif selon l'invention peut comporter au moins certaines des particularités suivantes :
- Dans le trajet de chargement de fluide et le cas échéant dans la boucle de déchargement de fluide, le condenseur est relié au compresseur par son entrée de fluide dans la boucle de refroidissement.
- La boucle de déchargement de fluide est confondue avec la boucle de refroidissement.
- Les moyens de commutation comprennent une première vanne à trois voies interposée dans la première branche et raccordée par des première et seconde voies à la sortie de l'évaporateur et à l'entrée du compresseur respectivement, une seconde vanne à trois voies raccordée par ses première, seconde et troisième voies aux extrémités aval, amont et amont des première, seconde et troisième branches respectivement, une quatrième branche de circuit reliant la troisième voie de la première vanne à l'extrémité amont de la seconde branche, et des moyens de commande coordonnée des deux vannes propres à faire communiquer soit les première et seconde voies de la première vanne et les première et seconde voies de la seconde vanne pour établir la boucle de refroidissement et de déchargement de fluide, soit les première et seconde voies de la première vanne et les première et troisième voies de la seconde vanne pour établir la boucle de réchauffage, soit les seconde et troisième voies de la première vanne et les première et troisième voies de la seconde vanne pour établir le trajet de chargement de fluide.
- Le premier détendeur est dans la seconde branche et un second détendeur est prévu dans la boucle secondaire.
- Le second détendeur est placé dans la troisième branche.

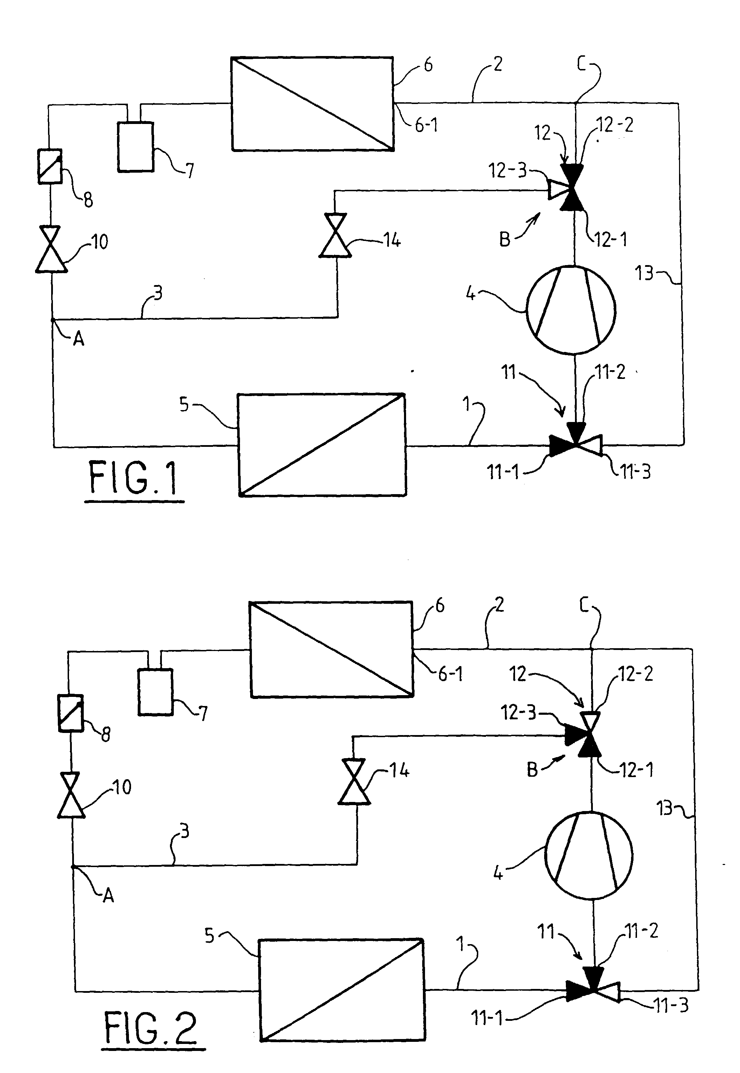

Les caractéristiques et avantages de l'invention seront exposés plus en détail dans la description ci-après, en se référant aux dessins annexés, sur lesquels les figures 1 à 3 sont des schémas du circuit de fluide d'un dispositif selon l'invention pour la climatisation et le chauffage de l'habitacle d'un véhicule, dans ses différents modes de fonctionnement.

Dans ce circuit circule un fluide propre à passer de l'état liquide à l'état gazeux en absorbant de la chaleur, et de l'état gazeux à l'état liquide en cédant de la chaleur, comme c'est le cas de façon habituelle dans les installations de climatisation de véhicules. Les composants du circuit sont également rencontrés de façon habituelle dans ces mêmes installations de climatisation.

Les composants du circuit illustré sont répartis dans trois branches 1, 2 et 3 se raccordant entre elles en deux points de jonction A et B. La branche 1 contient un compresseur 4 qui y fait circuler le fluide du point A vers le point B, et un évaporateur 5 placé en amont du compresseur. La branche 2 contient, du point B vers le point A, un condenseur 6, une bouteille 7, un clapet anti-retour 8 et un détendeur 10. Un second détendeur 14 est placé dans la branche 3. Une première vanne à trois voies 11 est interposée dans la branche 1 de façon que deux de ses voies 11-1 et 11-2 communiquent respectivement avec la sortie de l'évaporateur 5 et avec l'entrée du compresseur 4. Une seconde vanne à trois voies 12 est placée au point de jonction B de façon que ses trois voies 12-1, 12-2 et 12-3 se raccordent respectivement à l'extrémité aval de la première branche, c'est-à-dire à la sortie du compresseur 4, à l'extrémité amont de la seconde branche, c'est-à-dire à l'entrée du condenseur 6, et à l'extrémité amont de la troisième branche, c'est-à-dire à l'entrée du détendeur 14. Enfin, une quatrième branche 13, ne contenant aucun composant, relie la troisième voie 11-3 de l'électrovanne 11 à un point intermédiaire C de la branche 2, comprise entre la voie 12-2 et le condenseur 6.

Les électrovannes 11 et 12 sont commandées en coordination de façon à réaliser les trois configurations illustrées. Dans celle de la figure 1, chacune des deux vannes met en communication ses voies numérotées 1 et 2, comme indiqué par les deux triangles noirs. Le fluide circule alors dans une boucle fermée formée par les branches 1 et 2, la branche 3 et la branche 13 étant isolées par les vannes 12 et 11 respectivement. Cette boucle fonctionne comme un circuit classique de climatisation, le fluide passant de l'état liquide à l'état gazeux dans l'évaporateur 5 en absorbant de la chaleur et de l'état gazeux à l'état liquide dans le condenseur 6 en cédant de la chaleur. La chaleur absorbée dans l'évaporateur 5 peut être prélevée, directement ou indirectement, dans un flux d'air à envoyer dans l'habitacle du véhicule.

Dans la configuration de la figure 2, la vanne 11 fait encore communiquer ses voies 1 et 2, mais la vanne 12 fait communiquer cette fois ses voies 1 et 3. Le fluide circule donc dans une boucle fermée constituée par les branches 1 et 3, la branche 2 et la branche 13 étant isolées par les vannes 12 et 11 respectivement. Le fluide traverse donc le compresseur 4, l'évaporateur 5 et le détendeur 14. Ne traversant plus de condenseur, il reste en permanence à l'état gazeux. L'évaporateur 5 ne joue donc plus le rôle d'évaporateur, mais continue de jouer le rôle d'échangeur de chaleur, permettant de dissiper une grande partie de la chaleur produite par la compression du fluide dans le compresseur 4, cette chaleur pouvant être utilisée pour le chauffage de l'habitacle lorsque le moteur thermique du véhicule est froid. En particulier, le fluide en circulation étant à une température supérieure à la température ambiante, un flux d'air à envoyer dans l'habitacle peut être chauffé directement au contact de l'évaporateur.

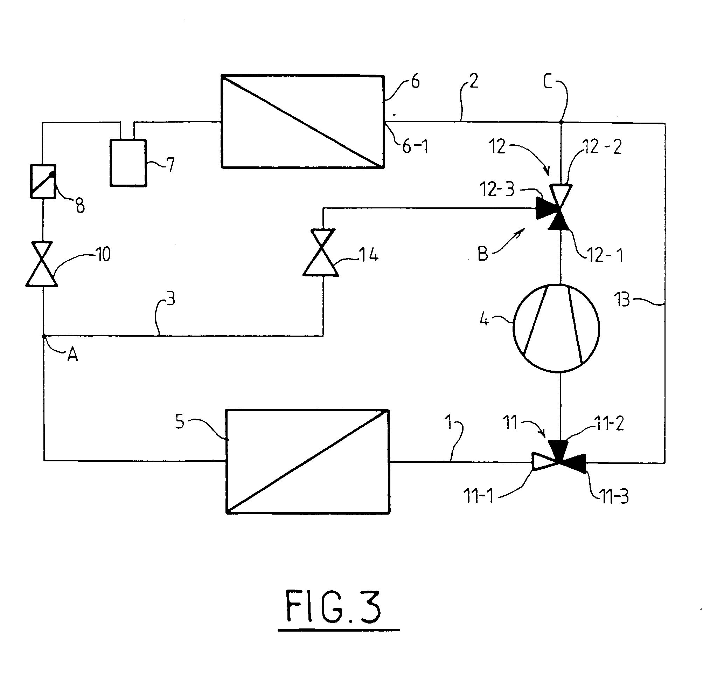

Dans la configuration illustrée à la figure 3, les vannes assurent la communication d'une part entre les voies 11-3 et 11-2, d'autre part entre les voies 12-1 et 12-3. L'entrée du compresseur est donc reliée, par l'intermédiaire de la branche 13, à l'entrée normale 6-1 du condenseur 6, d'où il peut extraire du fluide à l'état gazeux. Ce fluide circule ensuite dans la branche 3, mais ne peut revenir au condenseur à partir du point A, notamment en raison de la présence du clapet anti-retour 8. Le fluide parvient donc dans l'évaporateur 5, où il s'accumule, la vanne 11 n'assurant pas la communication entre la sortie de celui-ci et l'entrée du compresseur. La masse de fluide qui circulera dans les branches 1 et 3 après rétablissement de la configuration selon la figure 2 est ainsi augmentée.

Inversement, la configuration selon la figure 1 peut être établie momentanément pour permettre au compresseur de refouler du fluide dans le condenseur, réduisant ainsi la masse de fluide en circulation après le retour à la configuration selon la figure 2.

Les vannes à trois voies peuvent être commandées par tout dispositif de commande connu pour maintenir constante ou faire varier la masse de fluide circulant dans l'évaporateur dans le mode de réchauffage.

Par ailleurs, le choix des moments auxquels la commutation est réalisée ne fait pas partie de l'invention. A titre d'exemple, lors du démarrage de l'installation, la configuration de la figure 3 peut être établie si la température extérieure est au-dessous d'un seuil, lequel peut dépendre du besoin de chauffage exprimé par les occupants, pour compenser, par un apport de fluide, la pression insuffisante de celui-ci résultant de la température basse. La configuration selon la figure 2 est établie au bout d'un temps déterminé, ou immédiatement si la température extérieure est supérieure au seuil mentionné ci-dessus. On peut alors surveiller par exemple la température de l'air chauffé par l'évaporateur 5 et le cas échéant par un radiateur de chauffage placé en aval de celui-ci dans le trajet de l'air, et utiliser la commande des vannes 11 et 12 pour assurer une régulation de cette température.

Dans une variante du procédé selon l'invention, pour diminuer la puissance calorifique produite par le dispositif, au lieu de renvoyer du fluide dans le condenseur, on désaccouple au moins partiellement le compresseur du moteur du véhicule afin de réduire ou d'annuler momentanément sa vitesse de rotation.

Les vannes à trois voies peuvent être des électrovannes ou des vannes à commande manuelle, hydraulique, pneumatique ou autre.

## Revendications

1. Procédé pour modifier la température d'un flux d'air à envoyer dans l'habitacle d'un véhicule, par échange de chaleur avec un évaporateur (5) dans lequel circule un fluide qui passe également dans un compresseur (4) et dans un détendeur (10, 14), ce procédé comportant un mode de refroidissement du flux d'air dans lequel on fait circuler ledit fluide successivement dans l'évaporateur (5), dans le compresseur (4), dans un condenseur (6) où il cède de la chaleur à un autre milieu et dans un détendeur (10), et un mode de réchauffage du flux d'air dans lequel on envoie le fluide sortant du compresseur à l'évaporateur, sans passer par un condenseur, caractérisé en ce qu'il comporte un mode de chargement et/ou de déchargement du fluide dans lequel on extrait ou on ajoute du fluide de ou dans l'évaporateur de manière à augmenter ou réduire la masse de fluide dans l'évaporateur et, par conséquent,. la puissance calorifique produite par l'évaporateur lorsque le procédé fonctionne dans un mode de réchauffage d'air.

2. Procédé selon la revendication 1, comportant une boucle de climatisation caractérisé en ce que il comporte :
- une première étape dans laquelle la boucle fonctionne dans un mode de chargement du fluide, dans lequel le fluide est prélevé dans le condenseur (6) et est accumulé dans l'évaporateur (5),
- une seconde étape dans laquelle la boucle fonctionne dans un mode de réchauffage du flux d'air dans lequel une partie au moins du fluide accumulée dans l'évaporateur (5) lors de la première étape est transformée en puissance calorifique par le compresseur (4).

3. Procédé selon la revendication 1 ou 2, comportant une boucle de climatisation, caractérisé en ce que lorsque la boucle fonctionne dans un mode de déchargement, le fluide prélevé dans l'évaporateur (5) est refoulé dans le condenseur (6) pour diminuer le débit massique produit par le compresseur (4).

4. Procédé selon l'une des revendication précédentes, caractérisé en ce qu'on relie momentanément le compresseur et le condenseur de façon à extraire du fluide de celui-ci ou à y en introduire.

5. Procédé selon l'une des revendications précédentes, caractérisé en ce que le fluide traverse des détendeurs différents (10, 14) dans les deux modes.

6. Procédé selon l'une des revendications précédentes, caractérisé en ce que l'évaporateur (5) joue le rôle d'évaporateur dans le mode de refroidissement et joue seulement le rôle d'échangeur de chaleur dans le mode de réchauffage.

7. Procédé selon l'une des revendications précédentes, caractérisé en ce que le véhicule possède un moteur d'entraînement dont le fonctionnement dégage de la chaleur et qu'on utilise le mode de réchauffage pour le chauffage de l'habitacle dans les périodes où la chaleur fournie par le moteur est insuffisante à cet effet.

8. Dispositif de climatisation de l'habitacle d'un véhicule automobile, comprenant un circuit de fluide comportant une boucle de refroidissement (1, 2) composée d'une première branche (1) contenant un évaporateur (5) suivi d'un compresseur (4) et d'un seconde branche (2) contenant un condenseur (6), la boucle de refroidissement contenant également un premier détendeur (10) interposé entre le condenseur et l'évaporateur, et des moyens pour envoyer dans l'habitacle de l'air ayant subi un échange de chaleur avec l'évaporateur, le dispositif comprenant en outre une troisième branche (3) ne contenant pas de condenseur, placée en parallèle avec la seconde branche de façon à former avec la première branche une boucle de réchauffage (1, 3), et des moyens de commutation (11, 12, 13) pour commander la circulation du fluide, soit dans la boucle de refroidissement, soit dans la boucle de réchauffage, caractérisé en ce que les moyens de commutation commandent la circulation du fluide dans un trajet de chargement de fluide dans laquelle le condenseur est relié directement à l'entrée du compresseur.

9. Dispositif selon la revendication 8, caractérisé en ce que le circuit de fluide comporte une quatrième branche (13) ne contenant aucun composant et qui permet de relier l'entrée du compresseur (4) au condenseur (6).

10. Dispositif selon l'une des revendications 8 et 9, caractérisé en ce que lorsque le dispositif est dans un mode appelé mode de chargement, l'entrée du compresseur (4) est reliée par l'intermédiaire d'une quatrième branche (13) à l'entrée du condenseur (6) pour extraire du fluide de la seconde branche (2).

11. Dispositif selon l'une des revendications 8 à 10, caractérisé en ce que les moyens de commutation sont propres à commander également la circulation du fluide dans une boucle de déchargement de fluide dans laquelle le condenseur est relié directement à la sortie du compresseur.

12. Dispositif selon l'une des revendications 8 et 11, caractérisé en ce que, dans le trajet de chargement de fluide et le cas échéant dans la boucle de déchargement de fluide, le condenseur est relié au compresseur par son entrée (6-1) de fluide dans la boucle de refroidissement.

13. Dispositif selon la revendication 12, caractérisé en ce que la boucle de déchargement de fluide est confondue avec la bouche de refroidissement (1,2).

14. Dispositif selon la revendication 13, caractérisé en ce que les moyens de commutation comprennent une première vanne à trois voies (11) interposée dans la première branche et raccordée par des première et seconde voies (11-1, 11-2) à la sortie de l'évaporateur et à l'entrée du compresseur respectivement, une seconde vanne à trois voies (12) raccordée par ses première, seconde et troisième voies (12-1, 12-2, 12-3) aux extrémités aval, amont et amont des première, seconde et troisième branches respectivement, une quatrième branche de circuit (13) reliant la troisième voie de la première vanne à l'extrémité amont de la seconde branche, et des moyens de commande coordonnée des deux vannes propres à faire communiquer soit les première et seconde voies (11-1, 11-2) de la première vanne et les première et seconde voies (12-1, 12-2) de la seconde vanne pour établir la boucle de refroidissement et de déchargement de fluide (1, 2), soit les première et seconde voies (11-1, 11-2) de-la première vanne et les première et troisième voies (12-1, 12-3) de la seconde vanne pour établir la boucle de réchauffage (1, 3), soit les seconde et troisième voies (11-2, 11-3) de la première vanne et les première et troisième voies (12-1, 12-3) de la seconde vanne pour établir le trajet de chargement de fluide (6, C, 13, 11, B, A, 5).

15. Dispositif selon l'une des revendications 8 à 14, caractérisé en ce que le premier détendeur (10) est dans la seconde branche et qu'un second détendeur (14) est prévu dans la boucle secondaire.

16. Dispositif selon la revendication 15, caractérisé en ce que le second détendeur (14) est placé dans la troisième branche (3).

## Patentansprüche

1. Verfahren zum Verändern der Temperatur einer zu dem Innenraum eines Fahrzeugs geführten Luftströmung durch Wärmetausch mit einem Verdampfer (5), in welchem ein Fluid zirkuliert, welches auch durch einen Kompressor (4) und einen Druckminderer (10, 14) tritt, wobei das Verfahren umfaßt einen Kühlmodus der Luftströmung, in welchem man das Fluid sukzessive in dem Verdampfer (5), dem Kompressor (4), einem Kondensator (6), in welchem es Wärme an ein anderes Medium abgibt, und in einem Druckminderer (10) zirkulieren läßt, sowie einen Luftströmungserwärmungsmodus, in welchem man das von dem Kompressor austretende Fluid zu dem Verdampfer führt, ohne es durch einen Kondensator treten zu lassen, **dadurch gekennzeichnet**, daß das Verfahren einen Lade- und/oder Entlademodus für das Fluid umfaßt, in welchem man Fluid von dem Verdampfer entnimmt oder diesem Fluid zuführt, so daß die Fluidmasse in dem Verdampfer und demzufolge die durch den Verdampfer bereitgestellte thermische Leistung erhöht oder reduziert wird, wenn das Verfahren in einem Lufterwärmungsmodus betrieben wird.

2. Verfahren nach Anspruch 1, umfassend einen Klimakreis, **dadurch gekennzeichnet,** daß das Verfahren umfaßt:
- einen ersten Schritt, in welchem der Kreis in einem Lademodus des Fluids wirkt, in welchem das Fluid von dem Kondensator (6) entnommen und in dem Verdampfer (5) angesammelt wird,
- einen zweiten Schritt, in welchem der Kreis in einem Luftströmungserwännungsmodus wirkt, in welchem zumindest ein Teil des während des ersten Schritts in dem Verdampfer (5) angesammelten Fluids in thermische Leistung durch den Kompressor (4) umgesetzt wird.

3. Verfahren nach Anspruch 1 oder 2, umfassend einen Klimakreis, **dadurch gekennzeichnet**, daß, wenn der Kreis in einem Entlademodus betrieben wird, das in dem Verdampfer (5) entnommene Fluid in den Kondensator (6) zurückgedrängt wird, um den durch den Kompressor (4) erzeugten Massendurchsatz zu reduzieren.

4. Verfahren nach einem der vorangegangenen Ansprüche, **dadurch gekennzeichnet,** daß man kurzfristig den Kompressor mit dem Kondensator verbindet, so daß diesem Fluid entnommen oder zugeführt wird.

5. Verfahren nach einem der vorangegangenen Ansprüche, **dadurch gekennzeichnet,** daß das Fluid unterschiedliche Druckminderer (10, 14) in den zwei Modi durchquert.

6. Verfahren nach einem der vorangegangenen Ansprüche, **dadurch gekennzeichnet,** daß der Verdampfer (5) als Verdampfer in dem Kühlmodus und nur als Wärmetauscher in dem Erwärmungs- oder Heizmodus dient.

7. Verfahren nach einem der vorangegangenen Ansprüche, **dadurch gekennzeichnet,** daß das Fahrzeug einen Antriebsmotor aufweist, dessen Betrieb Wärme freisetzt, wobei man den Aufwärmungs- oder Heizmodus zur Beheizung des Innenraums in den Zeiten verwendet, in welchen die durch den Motor bereitgestellte Wärme zu diesem Zweck nicht ausreichend ist.

8. Klimaanlage für den Innenraum eines Kraftfahrzeugs, umfassend einen Fluidkreislauf mit einem Kühlkreis (1, 2), der gebildet ist aus einem ersten Zweig (1), welcher einen Verdampfer (5), gefolgt von einem Kompressor (4), enthält, und einem zweiten Zweig (2), welcher einen Kondensator (6) enthält, wobei der Kühlkreis ebenfalls einen ersten Druckminderer (10) umfaßt, zwischengelagert zwischen dem Kondensator und dem Verdampfer, sowie Mittel, um Luft in den Innenraum zu führen, welche einem Wärmeaustausch mit dem Verdampfer unterworfen wurde, wobei die Anlage ferner einen dritten Zweig (3) umfaßt, welcher keinen Kondensator enthält, vorgesehen parallel zu dem zweiten Zweig, so daß mit dem ersten Zweig ein Heizkreis (1, 3) gebildet wird, sowie Umschaltmittel (11, 12, 13), um die Fluidzirkulation zu steuern, und zwar entweder in dem Kühlkreis oder in dem Heizkreis, **dadurch gekennzeichnet,** daß die Umschaltmittel die Fluidzirkulation in einem Fluidladepfad steuern, in welchem der Kondensator direkt mit dem Eintritt des Kompressors verbunden ist.

9. Anlage nach Anspruch 8, **dadurch gekennzeichnet,** daß der Fluidkreislauf einen vierten Zweig (13) umfaßt, welcher keinen Bestandteil enthält und welcher es ermöglicht, den Eintritt des Kompressors (4) mit dem Kondensator (6) zu verbinden.

10. Anlage nach einem der Ansprüche 8 und 9, **dadurch gekennzeichnet,** daß, wenn die Anlage in einem sogenannten Lademodus vorliegt, der Eintritt des Kompressors (4) unter Zwischenschaltung eines vierten Zweigs (13) mit dem Eintritt des Kondensators (6) verbunden ist, um Fluid von dem zweiten Zweig (2) zu entnehmen.

11. Anlage nach einem der Ansprüche 8 bis 10, **dadurch gekennzeichnet**, daß die Umschaltmittel geeignet sind, ebenfalls die Zirkulation des Fluids in einem Fluidentladekreis zu steuern, in welchem der Kondensator direkt mit dem Austritt des Kompressors verbunden ist.

12. Anlage nach einem der Ansprüche 8 und 11, **dadurch gekennzeichnet**, daß bei dem Fluidladepfad und ansonsten bei dem Fluidentladekreis der Kondensator über seinen Fluideintritt (6-1) in dem Kühlkreis mit dem Kompressor verbunden ist.

13. Anlage nach Anspruch 12, **dadurch gekennzeichnet,** daß der Fluidentladekreis mit dem Kühlkreis (1, 2) zusammenfällt bzw. in diesen übergeht.

14. Anlage nach Anspruch 13, **dadurch gekennzeichnet**, daß die Umschaltmittel umfassen ein erstes Dreiwegeventil (11), zwischengelagert in dem ersten Zweig und jeweils angeschlossen an dem Austritt des Verdampfers und dem Eintritt des Kompressors durch erste und zweite Wege (11-1, 11-2), ein zweites Dreiwegeventil (12), angeschlossen durch dessen erste, zweite und dritte Wege (12-1, 12-2, 12-3) mit jeweils den flußabwärtsliegenden, flußaufwärtsliegenden und flußaufwärtsliegenden Enden der ersten, zweiten und dritten Zweige, einen vierten Zweig (13), welcher den dritten Weg des ersten Ventils mit dem flußaufwärtsliegenden Ende des zweiten Zweigs verbindet, sowie koordinierte Steuermittel der zwei Ventile, die vorgesehen sind, entweder in Verbindung zu setzen die ersten und zweiten Wege (11-1, 11-2) des ersten Ventils und die ersten und zweiten Wege (12-1, 12-2) des zweiten Ventils, um den Kühlkreis und den Fluidentladekreis (1, 2) zu bilden, oder die ersten und zweiten Wege (11-1, 11-2) des ersten Ventils und die ersten und dritten Wege (12-1, 12-3) des zweiten Ventils, um den Heizkreis (1, 3) zu bilden, oder die zweiten und dritten Wege (11-2, 11-3) des ersten Ventils und die ersten und dritten Wege (12-1, 12-3) des zweiten Ventils, um den Fluidladepfad (6, C, 13, 11, B, A, 5) zu bilden.

15. Anlage nach einem der Ansprüche 8 bis 14, **dadurch gekennzeichnet,** daß der erste Druckminderer (10) in dem zweiten Zweig vorliegt, und daß ein zweiter Druckminderer (14) in dem Sekundärkreis vorgesehen ist.

16. Anlage nach Anspruch 15, **dadurch gekennzeichnet**, daß der zweite Druckminderer (14) in dem dritten Zweig (3) angeordnet ist.

## Claims

1. A method for modifying the temperature of a stream of air to be delivered into the cabin of a vehicle, by heat exchange with an evaporator (5) in which there flows a fluid which also passes into a compressor (4) and into a flow restrictor (10, 14), the said method comprising a cooling mode for cooling the air stream in which the said fluid is caused to flow successively into the evaporator (5), into the compressor (4), into a condenser (6) where it gives up heat to another medium, and into a flow restrictor (10), and a heating mode for heating the air stream, in which the fluid leaving the compressor is delivered to the evaporator without passing through a condenser, characterised in that it includes a fluid charging and/or discharging mode, in which fluid is removed from or added to the evaporator in such a way as to increase or decrease the mass of fluid in the evaporator, and consequently the calorific power produced by the evaporator when the method is in operation in an air heating mode.

2. A method according to Claim 1, including an air conditioning loop, characterised in that it comprises:
- a first step in which the loop operates in a fluid charging mode in which the fluid is taken from within the condenser (6) and is accumulated in the evaporator (5),
- a second step in which the loop operates in a heating mode for heating the air stream, in which at least a part of the fluid accumulated in the evaporator (5) in the first step is transformed in calorific power by the compressor (4).

3. A method according to Claim 1 or Claim 2, including an air conditioning loop, characterised in that, when the loop is working in a discharge mode, the fluid taken from within the evaporator (5) is reintroduced into the condenser (6) so as to reduce the mass flow produced by the compressor (4).

4. A method according to one of the preceding Claims, characterised in that the compressor and the condenser are connected together momentarily in order to extract fluid from, or to introduce fluid into, the latter.

5. A method according to one of the preceding Claims, characterised in that the fluid passes through different flow restrictors (10, 14) in the two modes.

6. A method according to one of the preceding Claims, characterised in that the evaporator (5) works as an evaporator in the cooling mode, and works only as a heat exchanger in the heating mode.

7. A method according to one of the preceding Claims, characterised in that the vehicle has a propulsion motor which gives off heat in operation, and which makes use of the heating mode for heating the cabin during periods of time in which the heat supplied by the motor is insufficient for that purpose.

8. An air conditioning apparatus for the cabin of a motor vehicle, comprising a fluid circuit which includes a cooling loop (1, 2) comprising a first branch (1) containing an evaporator (5), followed by a compressor (4), and a second branch (2) containing a condenser (6), the cooling loop also containing a first flow restrictor (10) interposed between the condenser and the evaporator, and means for delivering into the cabin air which has undergone heat exchange with the evaporator, the apparatus further including a third branch (3) containing no condenser and arranged in parallel with the second branch, in such a way as to constitute, with the first branch, a heating loop (1, 3), together with changeover means (11, 12, 13) for controlling the flow of fluid either into the cooling loop or into the heating loop, characterised in that the changeover means control the flow of the fluid into a fluid charging path in which the condenser is connected directly to the inlet of the compressor.

9. Apparatus according to Claim 8, characterised in that the fluid circuit includes a fourth branch (13) which does not contain any component and which enables the inlet of the compressor (4) to be connected to the condenser (6).

10. Apparatus according to Claim 8 or Claim 9, characterised in that, when the apparatus is in a so-called charging mode, the inlet of the compressor (4) is connected through a fourth branch (13) to the inlet of the condenser (6) for extraction of the fluid from the second branch (2).

11. Apparatus according to one of Claims 8 to 10, characterised in that the changeover means are adapted so as also to control the flow of fluid into a fluid discharge loop, in which the condenser is connected directly to the outlet of the compressor.

12. Apparatus according to Claim 8 or Claim 11, characterised in that, in the fluid charging path and, if necessary, in the fluid discharge loop, the condenser is connected to the compressor through its fluid inlet (6-1) in the cooling loop.

13. Apparatus according to Claim 12, characterised in that the fluid discharge loop is also the cooling loop (1, 2).

14. Apparatus according to Claim 13, characterised in that the changeover means include a first three-way valve (11) interposed in the first branch and connected through first and second ports (11-1, 11-2) to the outlet of the evaporator and to the inlet of the compressor respectively, a second three-way valve (12) which is connected through its first, second and third ports (12-1, 12-2, 12-3) to the downstream, upstream and upstream ends of the first, second and third branches respectively, with a fourth circuit branch (13) connecting the third port of the first valve to the upstream end of the second branch, and coordinated control means for the two valves for putting selectively into communication with each other, either the first and second ports (11-1, 11-2) of the first valve and the first and second ports (12-1, 12-2) of the second valve so as to establish the cooling and fluid discharge loop (1, 2), or the first and second ports (11-1, 11-2) of the first valve and the first and third ports (12-1, 12-3) of the second valve so as to establish the heating loop (1, 3), or the second and third ports (11-2, 11-3) of the first valve and the first and third ports (12-1, 12-3) of the second valve so as to establish the fluid charging path (6, C, 13, 11, B, A, 5).

15. Apparatus according to one of Claims 8 to 14, characterised in that the first flow restrictor (10) is in the second branch, and in that a second flow restrictor (14) is arranged in the secondary loop.

16. Apparatus according to Claim 15, characterised in that the second flow restrictor (14) is arranged in the third branch (3).
